# FASCICULE DE BREVET EUROPEEN

(11) **EP 1 913 229 B1**
(45) Date de publication et mention de la délivrance du brevet: **06.05.2009**
(21) Numéro de dépôt: 06794233.4
(22) Date de dépôt: 27.07.2006
(51) Int. Cl.: E21B 17/01, F16L 1/14

(54) **INSTALLATION SOUS-MARINE ÉQUIPÉE D'UNE CONDUITE FLEXIBLE À COURBURE CONTRÔLÉE**
UNTERWASSERSYSTEM MIT EINEM BIEGSAMEN ROHR MIT VERSTELLBARER KRÜMMUNG
SUBSEA SYSTEM HAVING A FLEXIBLE PIPE WITH A CONTROLLED CURVATURE

(30) Priorité: 04.08.2005 FR 0508324
(43) Date de publication de la demande: 23.04.2008
(73) Titulaire: Technip France SA, 92400 Courbevoie (FR)
(72) Inventeur: DE AQUINO, Roberto, Jourdan, CEP-20530-560 Rio de Janeiro-RJ (BR); FERRAZ, Jean Paul, CEP 22290-290 Rio de Janeiro-RJ (BR); LAAF, Fred, CEP 24220-030 Niteroí, RJ (BR); SILVEIRA, Carlos, 22270-010 Botafoga, R.J. Rio de Janeiro - RJ (BR); VIGNOLES, Mario, A., Rio de Janeiro-RJ (BR)
(74) Mandataire: Bertrand, Didier
(86) Numéro de dépôt international: PCT/FR2006/001836
(87) Numéro de publication internationale: WO 2007/017574

(56) Documents cités:
- WO-A-95/18907
- WO-A-99/66169
- FR-A- 2 397 084
- FR-A- 2 538 444
- FR-A- 2 739 167
- FR-A- 2 748 293
- FR-A- 2 817 941
- US-B1- 6 276 456

## Description

La présente invention se rapporte à une installation sous-marine de transfert d'un hydrocarbure, entre une installation de fond et une installation de surface.

Ces installations sous-marines, comprennent au moins une conduite flexible qui s'étend en caténaire entre l'installation de fond et l'instillation de surface. Toutefois, lorsque la profondeur d'eau est grande, la conduite flexible exerce alors des efforts importants en traction sur l'installation de fond. Pour diviser ces efforts de traction, on accroche la conduite flexible en suspendant une portion intermédiaire à une bouée qui est retenue entre le fond et la surface, par une ligne d'ancrage ancrée dans le fond.

Or, la retenue de cette portion intermédiaire de conduite tend à former un point anguleux et pour atténuer cette déformation qui est préjudiciable à l'état de la conduite, on appuie la conduite sur un limiteur de courbure. Ce limiteur de courbure est constitué simplement d'un appui arrondi sur lequel repose la conduite, et c'est le limiteur de courbure qui est solidaire de la bouée. Des limiteurs de courbure sont décrits dans les documents WO 95/18907 et FR 2739167. On pourra aussi notamment se reporter au document US 5 505 560, lequel décrit un tel limiteur de courbure qui est ici lui-même en appui sur la bouée.

Un inconvénient de ce dispositif, réside notamment dans son encombrement, qui augmente le temps de mise en oeuvre de la conduite flexible lorsqu'elle est déposée depuis un bateau de pose à la surface. Car en effet, il ne peut être descendu dans l'eau à travers le puits prévu dans le bateau pour la descente de la conduite. Au surplus, ce type de dispositif est relativement coûteux à réaliser.

Un problème qui se pose alors et que vise à résoudre la présente invention, est de proposer une installation qui non seulement rende plus aisée la pose de la conduite flexible, mais aussi qui soit peu coûteuse.

Dans le but de résoudre ce problème et selon un premier aspect, la présente invention propose une installation sous-marine de transfert d'un hydrocarbure entre une installation de fond et une installation de surface, ladite installation sous-marine comprenant une conduite flexible étendue en caténaire entre ladite installation de fond et ladite installation de surface, ladite installation sous-marine comprenant en outre une bouée et un limiteur de courbure pour maintenir une portion intermédiaire de ladite conduite flexible en suspension entre le fond et la surface et en interdisant la courbure de ladite portion intermédiaire en dessous d'un rayon de courbure déterminé ; selon l'invention, ledit limiteur de courbure comporte un organe tubulaire flexible dans lequel est enfilée ladite portion intermédiaire, ledit organe tubulaire flexible comprenant une pluralité de portions sensiblement cylindriques successives, montées articulées les unes par rapport aux autres avec un débattement maximal prédéterminé ; et lesdites portions cylindriques de ladite pluralité de portions cylindriques sont adaptées à être entraînées les unes par rapport aux autres à leur débattement maximal prédéterminé en définissant un plan moyen, de façon que ledit organe tubulaire forme, sensiblement dans ledit plan moyen, une courbure moyenne présentant ledit rayon de courbure déterminé.

Ainsi, une caractéristique de l'invention réside dans la mise en oeuvre d'un organe tubulaire flexible dans lequel est enfilée la conduite, qui soit alors susceptible d'être pré-installé autour de la conduite puis déroulé avec la conduite. De la sorte, il n'est nul besoin de prévoir la pose et l'accrochage d'un limiteur de courbure encombrant au cours de l'installation. Au surplus, un tel organe tubulaire flexible qui est alors porté dans sa position fonctionnelle, lorsque la conduite flexible est entièrement installée et que la bouée est reliée à la portion intermédiaire de conduite, est relativement peu coûteux à mettre en oeuvre.

Selon un mode de mise en oeuvre de l'invention particulièrement avantageux, ladite pluralité de portions sensiblement cylindriques comporte des manchons situés à distance les uns des autres, qui enserrent sensiblement la conduite et qui sont reliés bout à bout par des organes annulaires qui recouvrent partiellement ces manchons. De la sorte, les organes tubulaires étant limités en débattement sur les manchons, les manchons sont eux-mêmes limités en débattement successivement les uns par rapport aux autres.

Avantageusement, lesdits manchons présentent chacun un corps cylindrique et deux extrémités symétriques l'une de l'autre terminées par une collerette formant deux premiers épaulements en regard. Et de manière préférentielle, lesdits organes annulaires qui sont susceptibles de recevoir à l'intérieur lesdites collerettes, présentent chacun deux extrémités symétriques l'une de l'autre recourbées radialement vers l'intérieur pour former deux seconds épaulements internes en regard et deux seconds épaulement externes opposés l'un de l'autre. De la sorte, deux manchons consécutifs sont adaptés à être reliés par un organe annulaires, de manière à ce que les deux collerettes respectives des deux manchons étendues en regard, puissent être encastrées dans l'organe annulaires, et que les deux premiers épaulements des deux manchons puissent venir en appui respectivement contre les deux seconds épaulements internes. En outre, un manchon est relié à deux organes annulaires consécutifs, une collerette à l'intérieur de chaque organe annulaire, de telle sorte que, les deux seconds épaulements externes opposés des deux organes annulaires respectifs sont susceptibles de venir en appui l'un contre l'autre, entre les deux premiers épaulements dudit manchon. Ainsi, et on le comprend aisément, lorsque la portion intermédiaire de conduite flexible, enfilée dans l'organe tubulaire, fléchie dans ledit plan moyen, les seconds épaulements internes des organes annulaires tendent à venir prendre appui contre les premiers épaulements des manchons, et ce vers l'extérieur de la courbure, tandis qu'à l'opposé, vers l'intérieur de la courbure, les seconds épaulements des organes annulaires tendent à venir eux respectivement en butée les uns contre les autres. De la sorte, le débattement maximal prédéterminé, dans le même sens étant atteint par tous les manchons et tous les organes annulaires, l'organe tubulaire définit alors à un are dont le rayon de courbure est minimal et par là même, limite à cette même courbure la portion intermédiaire de conduite.

En outre, et de manière préférentielle ladite bouée est retenue entre le fond et la surface par une ligne d'ancrage ancrée dans ledit fond, la bouée exerçant alors un effort orienté vers la surface à l'extrémité de la ligne d'ancrage et qui permet de supporter la conduite flexible au niveau de la portion intermédiaire. Selon un mode de mise en oeuvre préféré de l'invention, ladite bouée est montée autour dudit organe tubulaire. Par ailleurs, selon une autre mode préféré, ledit organe tubulaire est équipé d'un collier central, situé dans une position médiane sur l'organe tubulaire, et auquel ladite bouée est adaptée à être accrochée. De plus, le collier central est monté axialement en position fixe sur l'organe tubulaire, et selon une variante de réalisation, il est monté directement sur la conduite flexible en l'enserrant, et l'organe tubulaire est divisé en deux parties qui s'étendent de chaque côté de l'organe tubulaire auquel elles sont reliées. Ainsi, le collier central et l'organe tubulaire sont montés en position fixe sur la portion intermédiaire de conduite flexible.

De plus, ledit organe tubulaire présentant deux extrémités opposées l'une de l'autre, lesdites extrémités opposées sont maintenues rapprochées l'une de l'autre, par exemple au moyen d'un câble tendu selon une corde, lorsque ledit organe tubulaire forme ladite courbure moyenne. Ainsi, la conduite flexible est maintenue en position fixe selon cette courbure moyenne, de façon aisée et à un coût avantageux.

Par ailleurs, et ce de façon particulièrement avantageuse, lesdites extrémités opposées sont respectivement prolongées par des éléments raidisseurs permettant au-delà de l'organe tubulaire et de chaque côté, de contrôler encore les mouvements en débattement de la conduite flexible, de façon à réduire la détérioration de la conduite en fatigue. Selon une autre variante, lesdites extrémités opposées sont respectivement prolongées par des moyens tubulaires tronconiques adaptés à limiter les mouvement de ladite conduite en débattement; ladite conduite venant alors en appui contre une paroi interne tronconiques des moyens tubulaires tronconiques.

Selon un autre aspect, la présente invention propose une méthode de mise en oeuvre d'une installation sous-marine telle que définie ci-dessus, ladite conduite flexible présentant une partie de fond située en amont de ladite portion intermédiaire et une partie de surface située en aval, et ladite installation de surface présentant un puits de descente, et selon ladite méthode, on déroule ladite partie de fond, à partir de ladite installation de surface à travers ledit puits de descente, en s'arrêtant à la portion intermédiaire ; puis on équipe ladite portion intermédiaire située sur ladite installation de surface, avec ledit organe tubulaire ; on déroule ensuite ladite partie de surface à travers ledit puits de descente, ladite portion intermédiaire équipée dudit organe tubulaire traversant alors ledit puits de descente ; on accroche ladite portion intermédiaire équipée dudit organe tubulaire à ladite bouée ; et on rapproche l'une de l'autre les extrémités opposées de l'organe tubulaire pour entraîner lesdites portions cylindriques les unes par rapport aux autres à leur débattement maximal prédéterminé de façon que ledit organe tubulaire forme ladite courbure moyenne.

De la sorte, il n'est nul besoin de prévoir une seconde installation de surface adaptée à supporter un limiteur de courbure, volumineux et encombrant du type de ceux de l'art antérieur, qui est raccrochée à la portion intermédiaire au cours de la descente de la conduite flexible, puisque cette portion intermédiaire, équipée de l'organe tubulaire conforme à l'invention et non encore incurvée, est suffisamment étroite pour être enfilée à travers le puits de descente.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue schématique d'une installation sous marine conforme à l'invention ;
- la Figure 2 est une vue schématique de détail d'un élément illustré sur la Figure 1 ;
- la Figure 3 est une schématique de détail en coupe longitudinale de l'élément illustré sur la Figure 2 ;
- la Figure 4A est une vue schématique de détail de l'installation illustrée sur la Figure 1 selon un premier mode de réalisation particulier ;
- la Figure 4B est une vue schématique de détail de l'installation selon un deuxième mode de réalisation particulier ;
- la Figure 5 est une vue schématique de détail de l'installation selon un troisième mode de réalisation particulier ; et,
- la Figure 6 est une vue schématique de détail de l'installation illustrée sur la Figure 1 selon une autre variante de réalisation.

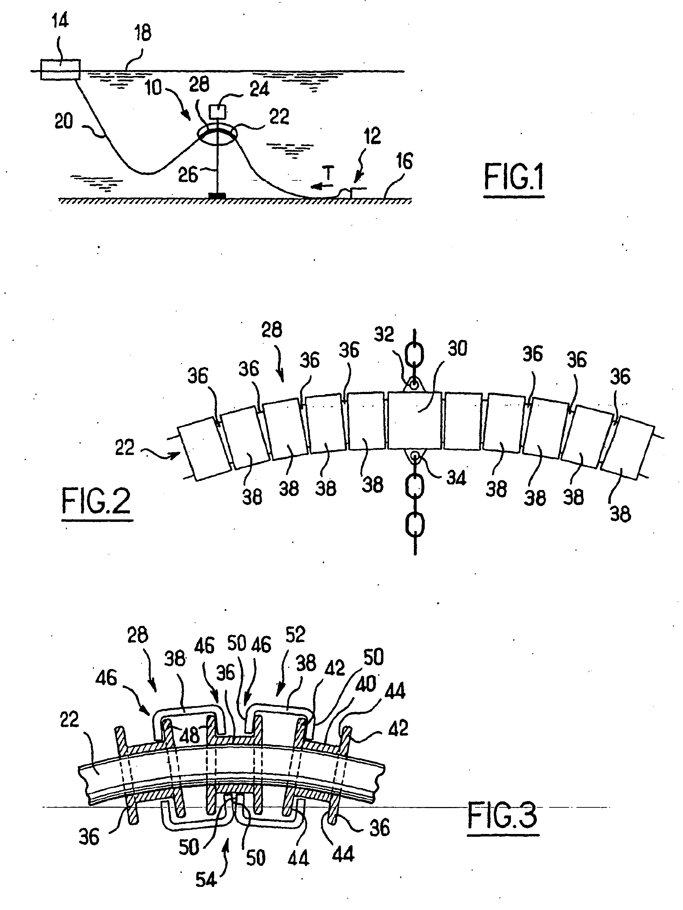

La Figure 1 illustre de façon schématique, une installation sous-marine 10 permettant de transférer un hydrocarbure entre une installation de fond 12 et une installation de surface 14. L'installation de fond 12 repose sur un fond marin 16 et permet d'extraire l'hydrocarbure se trouvant dans une nappe située en dessous de ce fond marin 16, tandis que l'installation de surface 14 flotte sur une surface 18 du milieu marin en surplomb de ladite nappe. L'installation de fond 12 et l'installation de surface 14 sont reliées par une conduite flexible 20 qui permet de transférer l'hydrocarbure depuis l'installation de fond 12 jusqu'à l'installation de surface 14. Pour diminuer, d'une part les efforts de traction T qu'exerce la conduite flexible 20 à la fois sur l'installation de fond 12 et sur l'installation de surface 14, et d'autre part les contraintes exercées sur la conduite flexible elle-même soumise à l'action de son propre poids, une portion intermédiaire de conduite 22 est maintenue en suspension entre le fond 16 et la surface 18 grâce à une bouée 24 qui est retenue entre le fond 16 et la surface 18 au moyen d'une ligne d'ancrage 26 précisément ancré dans le fond marin 16. La bouée 24 est suffisamment volumineuse pour exercer par exemple une traction équivalent à au moins 30 tonnes. En outre, la portion intermédiaire 22 est enfilée dans un limiteur de courbure constitué d'un organe tubulaire flexible 28 adapté à limiter la courbure de la conduite flexible 20 en suspension et ainsi à la préserver. Car en effet, plus la conduite flexible 20 se courbe, plus son diamètre efficace se réduit, et plus la pression à l'intérieur de la conduite augmente, pour un débit constant, ce qui augmente les contraintes liées à l'hydrocarbure et par conséquent, les risques de détérioration.

On va maintenant décrire plus en détail l'organe tubulaire flexible 28 en référence aux Figures 2 et 3.

On retrouve en vue partielle, sur la Figure 2, l'organe tubulaire flexible 28 dans lequel est enfilée la portion intermédiaire 22. En outre, l'organe tubulaire flexible 28 présente un collier central 30 situé dans une partie médiane de l'organe tubulaire 28 dont il est solidaire, et qui est destiné à être rattaché dans sa partie supérieure 32, à la bouée 24 et dans sa partie inférieure 34, à la ligne d'ancrage 26.

L'organe tubulaire flexible 28 est constitué de manchons 36 disposés bout à bout, reliés respectivement entre eux par des organes annulaires 38 disposés également bout à bout et qui entourent partiellement les manchons 36. Comme on l'expliquera en référence à la Figure 3, les manchons 36 sont montés articulés dans les organes annulaires 38 avec un débattement maximal prédéterminé, ce qui permet de limiter le rayon de courbure de l'organe tubulaire flexible 28.

On retrouvera partiellement sur cette Figure 3 l'organe tubulaire 28 en coupe longitudinale, présentant ici trois manchons 36 espacés régulièrement les uns des autres et dans lesquels est enfilée la conduite flexible 22. Les trois manchons 36, sont ici reliés deux à deux par deux organes annulaires 38, permettant d'illustrer le fonctionnement du limiteur de courbure.

Les manchons 36 présentent chacun un corps principal 40 qui enserre la conduite flexible 22 et deux extrémités opposées terminées chacune par une collerette libre 42 symétriques l'une de l'autre. Les collerettes libres 42 définissent ainsi de premiers épaulements en regard 44. En outre, les manchons 36 sont respectivement reliés entre eux par l'organe annulaire 38 qui vient coiffer les deux collerettes. 42 de deux manchons 36 consécutifs. Pour cela, l'organe annulaire 38 de symétrie circulaire, présente un diamètre au moins égal à celui des collerettes libres 42 et il est recourbé radialement vers l'intérieur et vers le corps principal 40 à chacune de ses extrémités 46, afin d'emprisonner précisément les collerettes 42. Toutefois, le corps principal 40 des manchons 36 est libre en translation dans les extrémités 46 recourbées. L'organe annulaire 38 définit alors deux épaulements internes en regard 48 et deux épaulements externes opposés l'un de l'autre 50. Par ailleurs, la distance axiale qui sépare les deux collerettes 42 d'un même manchon, est sensiblement égale à la distance qui sépare les deux extrémités 46 recourbées d'un organe annulaire 38.

Ainsi, lorsque la conduite flexible 22 tend à se courber, sous l'effet de son poids, selon un plan de courbure moyen, qui est ici celui du plan de la Figure 3, dans la partie externe à la courbure 52, les épaulements internes 48 des organes annulaires 38 viennent prendre appui contre les premiers épaulements 44 des manchons 36, tandis que dans la partie interne de la courbure 54, diamétralement opposée, les épaulements externes 50 des organes annulaires 38 viennent en butée les uns contre les autres. En conséquence, les manchons 36 sont respectivement entraînés en débattement dans les organes annulaires 38 à leur amplitude maximale prédéterminée, de telle sorte que la conduite flexible 22, est étendue selon une courbure moyenne maximale, où son rayon de courbure est lui à une valeur minimale.

Par ailleurs, et on le comprend aisément, la conduite flexible 22 ici fléchie, est susceptible d'être courbée librement dans un sens opposé, ou même redressée.

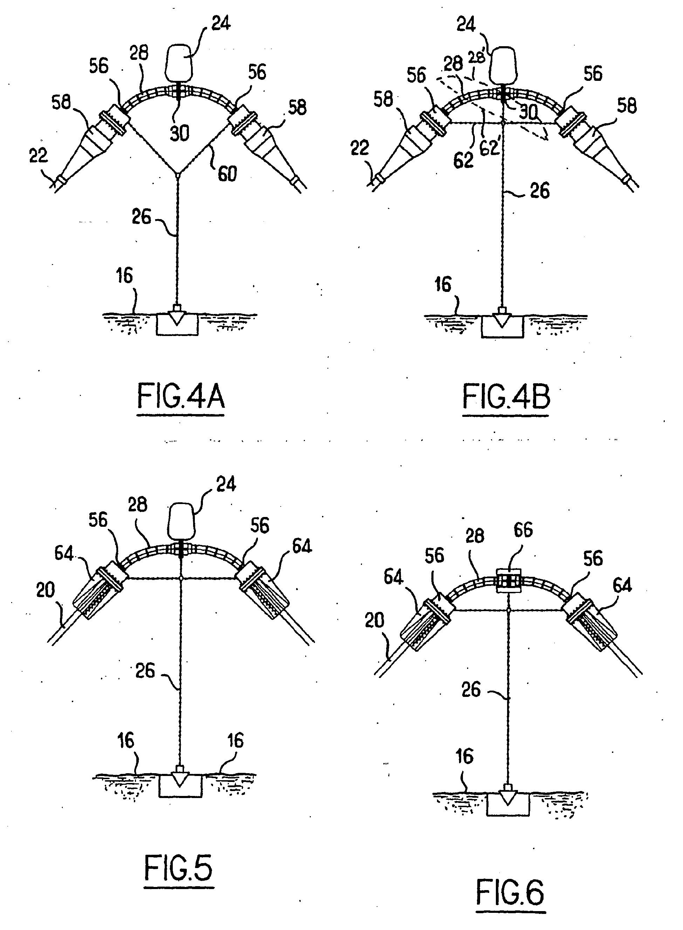

On se référera maintenant aux Figures 4A à 6, afin de décrire des modes particuliers de réalisation de l'invention.

On retrouve sur la Figure 4A une portion intermédiaire 22 de conduite flexible enfilée dans l'organe tubulaire 28, qui lui présente un collier central 30 relié à bouée 24. Par ailleurs, l'organe tubulaire 28 présente deux extrémités 56 prolongées respectivement par deux organes raidisseurs 58 ("bending stiffener" en langue anglaise) permettant de contrôler la courbure de la conduite flexible 22 au-delà et au voisinage de la portion intermédiaire 22. Les organes raidisseurs 58, sont constitués d'un manchon tronconique en matériau flexible, par exemple du polyuréthane, qui permet d'éviter une courbure trop importante de la conduite flexible 22 au sortir de l'organe tubulaire 28. En outre, les deux extrémités 56 de l'organe tubulaire 28 sont reliées entre elles par un lien flexible 60, par exemple un câble ou une chaîne, ou bien par un lien rigide selon une autre variante, et dont la longueur est, par exemple, sensiblement égale à deux fois le rayon de courbure de la courbure moyenne de la portion intermédiaire 22, le lien flexible 60, étant lui-même rattaché, en son milieu, à la ligne d'ancrage 26. De la sorte, la portion intermédiaire 22 de conduite flexible 20 est maintenue selon une courbure moyenne grâce à la bouée 24 qui tend à entraîner l'organe tubulaire 28 dans sa partie médiane vers la surface 18, tandis que le lien flexible 60 se divise en deux parties correspondant à deux rayons de la courbure moyenne qui est sensiblement circulaire.

Selon un deuxième mode de réalisation particulier, illustré sur la Figure 4B, le lien flexible est remplacé par un lien rectiligne 62 qui relie les deux extrémités 56 de l'organe tubulaire 28 selon une corde de la courbure moyenne de l'organe tubulaire 28 ; le collier central 30 étant alors directement rattaché à la ligne d'ancrage 26. Ainsi, l'organe tubulaire 28 est maintenu dans une position fixe de courbure moyenne. Dans une variante où le lien rectiligne 62 croise la ligne d'ancrage 26 sans lui être reliée par un anneau de liaison, l'organe tubulaire 28 incurvé, est susceptible de pivoter librement en dehors d'un plan horizontal, sensiblement autour d'un axe coupant le collier central 30, entre la bouée 24 et la ligne d'ancrage 26, lorsque par exemple l'installation de surface est sensiblement écartée de sa position d'origine. On a esquissé sur la figure 4B les positions 28' et 62' prises alors par l'organe tubulaire 28 et le lien rectiligne 62.

Selon un troisième mode de réalisation illustré à la Figure 5 où l'on retrouve en partie la configuration représentée sur la Figure 4B précédente, l'organe tubulaire 28 est ici prolongé à ses deux extrémités 56 par des moyens tronconiques 64 en entonnoir («bell mouth » en langue anglaise), qui s'étendent en s'évasant à partir des extrémités 56 et à leur voisinage, autour de la conduite flexible 20. De la sorte, la conduite flexible 20 est limitée en débattement au sortir de l'organe tubulaire 28.

En outre, selon une variante de réalisation, dans lequel on retrouve en partie la configuration illustrée sur la Figure 5 précédente, la bouée est non plus accrochée au collier central 30, mais elle est constituée d'un manchon annulaire 66 formant une chambre étanche autour de la partie médiane de l'organe tubulaire 28. Bien évidemment, le volume interne de la chambre délimitée par le manchon annulaire 66 est équivalent au volume interne des bouées 24 précitées.

Par ailleurs, la présente invention propose également une méthode de mise en oeuvre d'une installation sous-marine conforme à l'invention. La conduite flexible 20 est généralement pré-enroulée et portée sur une installation de surface, par exemple un bateau de pose, et elle est ensuite déroulée pour former l'installation. Les bateaux de pose présentent généralement une tour équipée de tensionneurs à l'aplomb d'un puits de descente qui permettent de dérouler la conduite flexible- dans le fond marin, en guidant la conduite à travers le puits de descente. Ainsi, on déroule une partie de la conduite, jusqu'à une portion intermédiaire à laquelle on prévoit d'accrocher la ligne d'ancrage 26 et la bouée 24. Sur le bateau de pose, on équipe la portion intermédiaire avec l'organe tubulaire 28, puis on guide cette portion intermédiaire équipée à travers le puits de descente pour dérouler ensuite le reste de la conduite flexible.

Par ailleurs, lorsque l'organe tubulaire 28 est suffisamment passé au travers du puits de descente, voire plus précisément au-dessous du bateau, on accroche la portion intermédiaire, équipée dudit l'organe tubulaire, à la bouée 24 et à la ligne d'ancrage 26 par l'intermédiaire du collier central 30. puis on vient former la courbure de l'organe tubulaire 28, en maintenant rapprochées l'une vers l'autre, les extrémités 56 de cet organe tubulaire 28, au moyen d'un câble par exemple.

## Revendications

1. Installation sous-marine (10) de transfert d'un hydrocarbure entre une installation de fond (12) et une installation de surface (14), ladite installation sous-marine comprenant une conduite flexible (20) étendue en caténaire entre ladite installation de fond (12) et ladite installation de surface (14), ladite installation sous-marine comprenant en outre une bouée (24) et un limiteur de courbure (28) pour maintenir une portion intermédiaire (22) de ladite conduite flexible (20) en suspension entre le fond (16) et la surface (18) et en interdisant la courbure de ladite portion intermédiaire (22) en dessous d'un rayon de courbure déterminé ;
**caractérisée en ce que** ledit limiteur de courbure comporte un organe tubulaire (28) flexible présentant deux extrémités opposées (56) l'une de l'autre, ladite portion intermédiaire (22) étant enfilée dans ledit organe tubulaire flexible (28), ledit organe tubulaire (28) flexible comprenant une pluralité de portions (36, 38) successives sensiblement cylindriques, montées articulées les unes par rapport aux autres avec un débattement maximal prédéterminé ;
et **en ce que** lesdites deux extrémités 56 de l'organe tubulaire 28 sont adaptées à être reliées entre elles par un lien pour maintenir lesdites extrémités 56 rapprochées l'une de l'autre, lesdites portions cylindriques (36, 38) de ladite pluralité de portions cylindriques étant entraînées les unes par rapport aux autres à leur débattement maximal prédéterminé en définissant un plan moyen, de façon que ledit organe tubulaire (28) soit maintenu dans une position fixe de courbure moyenne sensiblement dans ledit plan moyen, ladite courbure moyenne présentant ledit rayon de courbure déterminé.

2. Installation sous-marine selon la revendication 1, **caractérisée en ce que** ladite pluralité de portions sensiblement cylindriques comporte des manchons (36) reliés bout à bout par des organes annulaires (38).

3. Installation sous-marine selon la revendication 2, **caractérisée en ce que** lesdits manchons (36) présentent chacun deux extrémités symétriques l'une de l'autre terminées par une collerette (42) formant deux premiers épaulements en regard (44).

4. Installation sous-marine selon la revendication 2 ou 3, **caractérisée en ce que** lesdits organes annulaires (38) présentent chacun deux extrémités symétriques (46) l'une de l'autre recourbées radialement vers l'intérieur pour former deux seconds épaulements internes (48) en regard et deux seconds épaulement externes opposés (50) l'un de l'autre.

5. Installation sous-marine selon l'une quelconque des revendications 1 à 4, **caractérisée en ce que** ladite bouée (24) est retenue entre le fond (16) et la surface (18) par une ligne d'ancrage (26) ancrée dans ledit fond.

6. Installation sous-marine selon l'une quelconque des revendications 1 à 5, **caractérisée en ce que** ladite bouée (66) est montée autour dudit organe tubulaire (28).

7. Installation sous-marine selon l'une quelconque des revendications 1 à 5, **caractérisée en ce que** ledit organe tubulaire (28) est équipé d'un collier central (30) auquel ladite bouée (24) est adaptée à être accrochée.

8. Installation sous-marine selon l'une quelconque des revendications 1 à 7, **caractérisée en ce que** lesdites extrémités opposées (56) sont respectivement prolongées par des éléments raidisseurs (58).

9. Installation sous-marine selon l'une quelconque des revendications 1 à 8, **caractérisée en ce que** lesdites extrémités opposées (56) sont respectivement prolongées par des moyens tronconiques (64) adaptés à limiter les mouvement de ladite conduite en débattement.

10. Méthode de mise en oeuvre d'une installation sous-marine selon l'une quelconque des revendications 1 à 9, ladite conduite flexible (20) présentant une partie de fond située en amont de ladite portion intermédiaire (22) et une partie de surface située en aval, et ladite installation de surface présentant un puits de descente, **caractérisée en ce qu'**elle comprend les étapes suivantes :
- on déroule ladite partie de fond, à partir de ladite installation de surface à travers ledit puits de descente ;
- on équipe ladite portion intermédiaire (22) située sur ladite installation de surface, avec ledit organe tubulaire (28) ;
- on déroule ladite partie de surface à travers ledit puits de descente, ladite portion intermédiaire équipée dudit organe tubulaire traversant ledit puits de descente ;
- on accroche ladite portion intermédiaire (22) équipée dudit organe tubulaire (28) à ladite bouée ; et
- on relie lesdites extrémités 56 entre elles par un lien pour les maintenir rapprochées l'une de l'autre, lesdites portions cylindriques (36, 38) étant entraînées les unes par rapport aux autres à leur débattement maximal prédéterminé de façon que ledit organe tubulaire (28) forme ladite courbure moyenne.

## Claims

1. A subsea system (10) for transferring hydrocarbons between a seabed system (12) and a surface system (14), said subsea system comprising a flexible pipe (20) extended in a catenary between said seabed system (12) and said surface system (14), said subsea system further comprising a buoy (24) and a curvature limiter (28) for holding an intermediate portion (22) of said flexible pipe (20) suspended between the seabed (16) and the surface (18) and preventing the curvature of said intermediate portion (22) from being below a given radius of curvature,
**characterized in that** said curvature limiter comprises a flexible tubular member (28) having two mutually opposing ends (56), said intermediate portion (22) being slipped into said flexible tubular member (28), said flexible tubular member (28) comprising a plurality of successive substantially cylindrical portions (36, 38), articulated relative to one another will a predetermined maximum displacement,
and **in that** said two ends (56) of the tubular member (28) can be joined together by a link to hold said ends (56) close to each other, said cylindrical portions (36, 38) of said plurality of cylindrical portions being driven relative to one another to their predetermined maximum displacement defining a mean plane in such a way that said tubular member (28) is held in a fixed position of mean curvature substantially in said mean plane, said mean curvature having said given radius of curvature.

2. The subsea system as claimed in Claim 1,
**characterized in that** said plurality of substantially cylindrical portions comprise sleeves (36) connected end to end by annular members (38).

3. The subsea system as claimed in Claim 2,
**characterized in that** said sleeves (36) each have two mutually symmetrical ends closed off by a flange (42) forming two facing first shoulders (44).

4. The subsea system as claimed in either Claim 2 or Claim 3, **characterized in that** said annular members (38) each have two mutually symmetrical ends (46) which are curved radially inward to form two facing second inner shoulders (48) and two opposing second outer shoulders (50).

5. The subsea system as claimed in any one of Claims 1 to 4, **characterized in that** said buoy (24) is held between the seabed (16) and the surface (18) by an anchoring line (26) anchored in said seabed.

6. The subsea system as claimed in any one of Claims 1 to 5, **characterized in that** said buoy (66) is mounted around said tubular member (28).

7. The subsea system as claimed in any one of Claims 1 to 5, **characterized in that** said tubular member (28) is provided with a central collar (30) to which said buoy (24) can be attached.

8. The subsea system as claimed in any one of Claims 1 to 7, **characterized in that** said opposing ends (56) are respectively extended by bending stiffeners (58).

9. The subsea system as claimed in any one of Claims 1 to 8, **characterized in that** said opposing ends (56) are respectively extended by frustoconical means (64) which are capable of limiting the displacement movements of said pipe.

10. A method for implementing a subsea system as claimed in any one of Claims 1 to 9, said flexible pipe (20) having a seabed part located upstream of said intermediate portion (22) and a surface part located downstream, and said surface system having a lowering shaft, **characterized in that** it includes the following steps:
- said seabed part is unwound from said surface system through said lowering shaft;
- said intermediate portion (22), which is located on said surface system, is provided with said tubular member (28);
- said surface part is unwound through said lowering shaft, said intermediate portion, which is provided with said tubular member, passing through said lowering shaft;
- said intermediate portion (22), which is provided with said tubular member (28), is attached to said buoy; and
- said ends (56) are joined together by a link to hold them close to each other, said cylindrical portions (36, 38) being driven relative to each other to their predetermined maximum displacement in such a way that said tubular member (28) forms said mean curvature.

## Patentansprüche

1. Unterwasseranlage (10) zur Beförderung eines Kohlenwasserstoffs zwischen einer Einrichtung (12) auf dem Meeresboden und einer Einrichtung (14) an der Wasseroberfläche, wobei die Unterwasseranlage eine flexible Leitung (20) aufweist, welche sich zwischen der Einrichtung (12) auf dem Meeresboden und der Einrichtung (14) an der Wasseroberfläche als Kettenleitung erstreckt, wobei die Unterwasseranlage außerdem eine Boje (24) und einen Krümmungsbegrenzer (28) zur Halterung eines Zwischenabschnitts (22) der flexiblen Leitung (20) in Aufhängung zwischen dem Meeresboden (16) und der Wasseroberfläche (18) und zur Verhinderung eines Unterschreitens eines festgelegten Krümmungsradius durch die Krümmung des Zwischenabschnitts (22) aufweist;
**dadurch gekennzeichnet, dass** der Krümmungsbegrenzer ein flexibles Rohrbauteil (28) mit zwei voneinander abgewandten Enden (56) aufweist, wobei der Zwischenabschnitt (22) in das flexible Rohrbauteil (28) eingefädelt ist, wobei das flexible Rohrbauteil (28) eine Vielzahl von aufeinanderfolgenden, im Wesentlichen zylindrischen Teilen (36, 38) umfasst, welche untereinander mit einem vorher festgelegten maximalen Durchfederungsweg gelenkig zusammengebaut sind;
und dass die beiden Enden 56 des Rohrbauteils 28 für eine Verbindung untereinander durch ein Verbindungsteil angepasst sind, um die Enden 56 nah beieinander zu halten, wobei die zylindrischen Teile (36, 38) der Vielzahl zylindrischer Teile in Bezug aufeinander bis zu ihrem maximalen vorher festgelegten Durchfederungsweg mitgeführt sind, indem eine mittlere Ebene derart bestimmt ist, dass das Rohrbauteil (28) in einer festen Stellung einer durchschnittlichen Krümmung, die im Wesentlichen in der mittleren Ebene liegt, gehalten ist, wobei die durchschnittliche Krümmung den festgelegten Krummungsradius aufweist.

2. Unterwasseranlage nach Anspruch 1, **dadurch gekennzeichnet, dass** die Vielzahl von im Wesentlichen zylindrischen Teilen Muffen (36) aufweist, welche Kopf an Kopf durch ringförmige Bauteile (38) verbunden sind.

3. Unterwasseranlage nach Anspruch 2, **dadurch gekennzeichnet, dass** die Muffen (36) jeweils zwei symmetrische Enden aufweisen, welche jeweils in einem Kragen (42) enden, wobei zwei erste sich zugewandte Schultern (44) gebildet sind.

4. Unterwasseranlage nach Anspruch 2 oder 3, **dadurch gekennzeichnet, dass** die ringförmigen Bauteile (38) jeweils zwei symmetrische Enden (46) aufweisen, welche zur Bildung von zwei sich zugewandten zweiten inneren Schultern (48) und zwei voneinander abgewandten zweiten äußeren Schultern (50) jeweils radial nach innen umgebogen sind.

5. Unterwasseranlage nach einem der Ansprüche 1 bis 4, **dadurch gekennzeichnet, dass** die Boje (24) zwischen dem Meeresboden (16) und der Wasseroberfläche (18) durch eine Ankerleine (26) in dem Meeresboden verankert ist.

6. Unterwasseranlage nach einem der Ansprüche 1 bis 5, **dadurch gekennzeichnet, dass** die Boje (66) um das Rohrbauteil (28) herum angebracht ist.

7. Unterwasseranlage nach einem der Ansprüche 1 bis 5, **dadurch gekennzeichnet, dass** das Rohrbauteil (28) mit einem zentralen Ring (30) ausgerüstet ist, wobei die Boje (24) zur Anhängung an diesem angepasst ist.

8. Unterwasseranlage nach einem der Ansprüche 1 bis 7, **dadurch gekennzeichnet, dass** die voneinander abgewandten Enden (56) jeweils durch Versteifungselemente (58) verlängert sind.

9. Unterwasseranlage nach einem der Ansprüche 1 bis 8, **dadurch gekennzeichnet, dass** die voneinander abgewandten Enden (56) jeweils durch kegelförmige Einrichtungen (64), welche zur Begrenzung der Bewegungen der Leitung im Durchfederungsweg angepasst sind, verlängert sind.

10. Verfahren zum Aufstellen einer Unterwasseranlage nach einem der Ansprüche 1 bis 9, wobei die flexible Leitung (20) einen Bodenabschnitt, welcher stromaufwärts von dem Zwischenabschnitt (22) angeordnet ist, und einen Oberflächenabschnitt aufweist, welcher stromabwärts angeordnet ist, und die Einrichtung an der Wasseroberfläche einen Niederführungsschacht aufweist, **dadurch gekennzeichnet, dass** es die folgenden Verfahrensschritte umfasst:
- Abrollen des Bodenabschnitts von der Einrichtung an der Wasseroberfläche durch den Niederführungsschacht;
- Ausrüsten des Zwischenabschnitts (22), welcher sich auf der Einrichtung an der Wasseroberfläche befindet, mit dem Rohrbauteil (28);
- Abrollen des Oberflächenabschnitts durch den Niederführungsschacht, wobei der mit dem Rohrbauteil ausgerüstete Zwischenabschnitt den Niederfühungsschacht passiert;
- Anhängen des Zwischenabschnitts (22), welcher mit dem Rohrbauteil (28) ausgerüstet ist, an der Boje; und
- Verbinden der Enden 56 untereinander durch ein Verbindungsteil, um die Enden (56) nah beieinander zu halten, wobei die zylindrischen Teile (36, 38) in Bezug aufeinander bis zu ihrem maximalen vorher festgelegten Durchfederungsweg mitgeführt sind, derart bestimmt ist, dass das Rohrbauteil (28) die durchschnittliche Krümmung bildet.
